Europäisches Patentamt

European Patent Office

Office européen des brevets

(19)

(11) Veröffentlichungsnummer : **0 034 845**
B1

# EUROPÄISCHE PATENTSCHRIFT

(12)

(45) Veröffentlichungstag der Patentschrift :
25.07.84

(21) Anmeldenummer : 81200123.8

(22) Anmeldetag : 02.02.81

(51) Int. Cl.³ : **H 02 H  7/125**, H 02 M  1/06,
H 02 M  1/18, H 02 P  9/12,
H 03 K 17/08

(54) **Schutzschaltung.**

(30) Priorität : **25.02.80 CH 1464/80**

(43) Veröffentlichungstag der Anmeldung :
**02.09.81 Patentblatt 81/35**

(45) Bekanntmachung des Hinweises auf die Patenterteilung : **25.07.84 Patentblatt 84/30**

(84) Benannte Vertragsstaaten :
**CH DE FR LI SE**

(56) Entgegenhaltungen :
**DE-B- 1 175 321
DE-B- 1 638 592
US-A- 3 614 531
ELEKTRIK, Band 31, Nr. 3, 1977 T.MLINKO « Überspannungsschutz einer Stromrichter-Erregereinrichtung für einen geregelten Gleichstrom-Walzwerkhauptantrieb »**

(73) Patentinhaber : **BBC Aktiengesellschaft Brown,
Boveri & Cie.
Haselstrasse
CH-5401 Baden (CH)**

(72) Erfinder : **Maier, Franz, Dipl.-Ing. Dr.techn.
Winzerstrasse 42 B
CH-5430 Wettingen (CH)**

**Beschreibung**

Die Erfindung bezieht sich auf eine Schutzschaltung zum Unterbrechen des von einem Stromrichter an eine induktive Last fliessenden Stromes und zur Entregung der induktiven Last, enthaltend einen Löschkreis, der zu mindestens einem Schaltthyristor parallelgeschaltet ist und der ein Löschventil und einen dazu in Reihe geschalteten Löschkondensator aufweist, sowie mindestens einen parallel zur Last geschalteten Entregungskreis mit mindestens einem Entregungswiderstand und einem dazu in Reihe geschalteten Entregungsventil.

Eine solche Schutzschaltung ist aus der DE-B-1 638 592 bekannt. Mit dieser Schutzschaltung wird ein induktiver Verbraucher schnell entregt, welcher über einen Stromrichter mit gesteuerten Ventilen an die Phasen R, S, T eines Wechselstromnetzes angeschlossen ist. In dieser Anordnung liegen parallel zum Gleichstromausgang des Stromrichters jeweils in gegenüberliegenden Zweigen einer Brückenschaltung zwei für die Löschung der gesteuerten Ventile bemessene Kondensatoren. In der Brückendiagonale ist ein Thyristor vorgesehen, welcher im Störungsfall von einer geeigneten Schutzeinrichtung gezündet wird, so dass die Kondensatoren über den Thyristor miteinander in Reihe geschaltet sind. Neben der Reihenschaltung der Kondensatoren liegt auch eine Reihenschaltung eines Widerstandes mit einer Diode parallel zum Gleichstromausgang des Stromrichters bzw. zum induktiven Stromverbraucher. Wird diese Schaltungsanordnung bei grossen Steuerwinkeln des Stromrichters betrieben, so bewirken die dabei auftretenden negativen Spannungs-Zeit-Flächen, dass die Diode leitend wird und somit für den Strom einen Nebenschluss zum Verbraucher mit entsprechenden Verlusten bildet.

Eine weitere Schutzschaltung zur Schnellentregung eines induktiven Verbrauchers ist aus Wissenschaftliche. Berichte AEG-TELEFUNKEN Bd. 48 (1975) S. 115 bekannt. Diese Schutzschaltung enthält eine parallel zur Last geschaltete und gegen den Laststrom polarisierte Diode, die einen Entregungskreis bildet, der nach dem Abschalten des Laststroms die induktive Last überbrückt und den Entregungsstrom übernimmt. Wird diese Schutzschaltung für Mischstrom von einem gesteuerten Gleichrichter verwendet, dessen Spannung bei grossem Ansteuerwinkel eine kurzzeitige Umkehrung der Polarisation erfährt, dann wird während dieser Zeitspanne die Diode in den leitfähigen Zustand geschaltet und bildet einen Nebenschluss zur Last, durch den ein Teil des Laststroms fliesst.

Um diesen Stromnebenschluss zu vermeiden, werden für grosse elektrische Maschinen, deren Feldwicklung mit einem Mehrphasengleichrichter verbunden ist, vorzugsweise Schutzschalter mit Sprengauslösung verwendet. Aufbau und Wirkungsweise solcher Schutzschalter sind jedem Fachmann bekannt und beispielsweise von Brückner und Schmitz in calor-Emag-Mitteilungen 1956, Heft 4, S. 2 ff. gezeigt und beschrieben. Obwohl diese Art Schalter zufriedenstellend funktioniert, weist er noch einige wesentliche Nachteile auf. Der Schalter wird bei jeder Sprengauslösung zerstört und muss ersetzt werden, er benötigt ein massives, relativ grosses Gehäuse, das beim Aufsprengen weggeschleuderte Teile auffängt, und er kann nicht in bewegte Maschinenteile eingebaut werden.

Aus der US-A-3 614 531 ist eine Schutzschaltung bekannt, mit welcher die Ventile eines Gleichrichters gegen eine in Sperrichtung der Ventile wirkende Ueberspannung aus einem eine induktive Last enthaltenden Lastkreis wirksam geschützt werden. Die Schutzwirkung wird dadurch erreicht, dass ein antiparallel zu den Gleichrichterventilen angeordnetes, steuerbares Ventil gezündet wird, wenn eine im Lastkreis induzierte und gegen den Laststrom wirkende Spannung einen vorgegebenen Wert überschritten hat. Damit erhält der von der induzierten Spannung verursachte in der Last entgegengesetzt fliessende Strom einen Freilaufkreis. Mit dieser Schaltungsanordnung kann jedoch der Stromfluss zwischen dem Gleichrichter und dem Last- bzw. Freilaufkreis nicht unterbrochen werden.

In der Zeitschrift « Elektrie » 31 (1977), Heft 3, S. 151, Bild 2 ist eine Schaltungsanordnung zum Ueberspannungsschutz einer Stromrichter-Erregereinrichtung für einen geregelten Gleichstrom-Walzwerkhauptantrieb beschrieben, bei der die in der Erregerwicklung einer Gleichstrommaschine grosser Leistung gespeicherte Energie in einem über einen steuerbaren Thyristor kurzgeschlossenen Stromkreis vernichtet wird. Da dieser Stromkreis jedoch eine Drossel benötigt, verzögert sich naturgemäss die Stromkommutierung in diesen kreis.

Hier will die Erfindung Abhilfe schaffen. Die Erfindung, wie sie in den Ansprüchen gekennzeichnet ist, löst die Aufgabe eine Schutzschaltung der eingangs genannten Art zu schaffen, deren mindestens einer Entregungskreis auch bei grosser Aussteuerung frei von Laststrom ist, und welche bei geeigneter Ausbildung gegebenenfalls auch zum sicheren Unterbrechen des Kreisstromes einer Gegenparallelschaltung geeignet ist.

Die durch die Erfindung erreichten Vorteile sind im wesentlichen darin zu sehen, dass die aus rein elektronischen Bauelementen aufgebaute Schutzschaltung verunmöglicht, dass ein Teil des Laststromes durch den Entregungskreis fliesst, auch wenn die den Laststrom erzeugende Spannung periodisch erscheinende Spitzen mit umgekehrtem Vorzeichen enthält, wobei die Schutzschaltung gemäss Anspruch 1 ferner bei einer minimalen Anzahl an Bauelementen eine hohe Ansprechgenauigkeit aufweist, während die Schutzschaltung gemäss Anspruch 3 darüber hinaus zum sicheren Schutz kreisstrombehafteter Erregersysteme verwendet werden kann.

Nachfolgend werden Ausführungsbeispiele der Erfindung anhand der Zeichnung dargestellt. Hierbei zeigen :

Figur 1 das Prinzipschema einer Schutzschaltung zum Unterbrechen des von einer Phasenmittelpunktschaltung an eine induktive Last fliessenden Stroms und zur Entregung der induktiven Last, bei der der Löschkreis vom Entregungskreis getrennt ist und ein zum Laden des Löschkondensators vorgesehener Ladekreis dargestellt ist,

Figur 2 das Prinzipschema einer erfindungsgemässen Schutzschaltung, deren Löschkreis und Entregungskreis einen gemeinsamen Stromzweig aufweisen und deren Löschthyristor zugleich als gesteuertes Ventil für den Entregungskreis verwendet ist,

Figur 3 das Prinzipschema einer erfindungsgemässen Schutzschaltung mit einem Schaltthyristor, der in der einen Ausgangsleitung eines ungesteuerten Brückengleichrichters angeordnet ist,

Figur 4 das Prinzipschema einer erfindungsgemässen Schutzschaltung, deren Löschkreis und Entregungskreis einen gemeinsamen Stromzweig aufweisen, wobei der Löschkreis parallel zu einem gesteuerten Brückengleichrichter angeschlossen ist, und

Figur 5 das Prinzipschema einer erfindungsgemäss ausgebildeten kreisstrombehafteten Gegenparallelschaltung, bei der der Strom durch die gesteuerten Ventile im Gleichrichter- und im Wechselrichterteil mit nur einem Löschkreis unterbrochen werden kann.

Die in den Figuren gezeigten Thyristoren sind mit zugeordneten elektronischen Steuerkreisen verbunden. Der Aufbau und die Funktion solcher Steuerkreise sowie deren Zusammenwirken mit den Thyristoren sind jedem Fachmann bekannt, weshalb sie in den Figuren nicht gezeigt und in den entsprechenden Beschreibungsteilen auch nicht beschrieben sind.

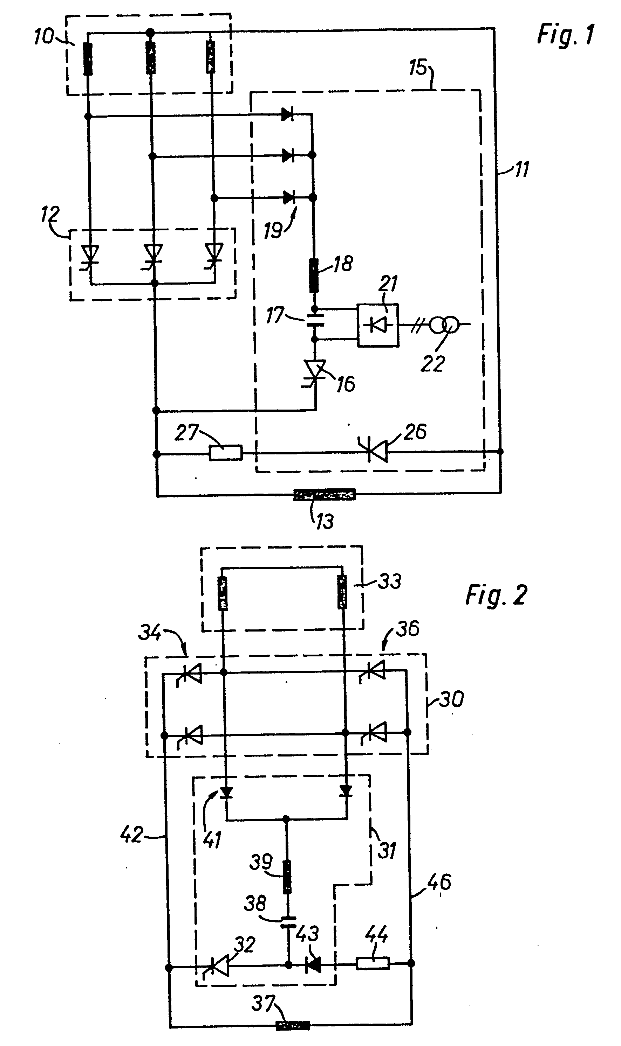

Zum Löschkreis der neuen Schutzschaltung gehört notwendigerweise ein Ladekreis für den Löschkondensator. Dieser Ladekreis ist schematisch in Fig. 1 gezeigt, in den weiteren Figuren 2 bis 5 der einfachen Darstellung wegen aber weggelassen worden.

Die Fig. 1 zeigt schematisch eine Drei-Phasenmittelpunktschaltung zum Speisen der Feldwicklung einer elektrischen Maschine mit einer zugeordneten Schutzschaltung.

Zur Drei-Phasenmittelpunktschaltung gehört die Drei-Phasensekundärwicklung 10 eines Transformators, deren einer gemeinsamer Ausgang über eine Leitung 11 und deren andere drei Ausgänge über einen Gleichrichter 12, der drei Thyristoren enthält, mit der Feldwicklung 13 der Maschine verbunden ist. Die Schutzschaltung 15 enthält einen Löschthyristor 16, der mit einem Löschkondensator 17 und einer Löschdrossel 18 in Reihe geschaltet ist. Der freie Anschluss des Löschthyristors ist mit dem Ausgang des Gleichrichters 12 und der freie Anschluss der Löschdrossel über drei parallel geschaltete Entkopplungsdioden 19 mit den Zuleitungen zum Gleichrichter verbunden. Die beiden Anschlüsse des Löschkondensators 17 sind ausserdem mit einem Ladegleichrichter 21 verbunden, der an einen Speisetransformator 22 angeschlossen ist. Zur Schutzschaltung gehört weiter ein Entregungsthyristor 26, der zu einem Entregungswiderstand 27 in Reihe geschaltet ist. Diese Reihenschaltung bildet einen steuerbaren Parallelkreis zur Feldwicklung 13.

Zur Beschreibung der Funktion der neuen Schutzschaltung sei angenommen, dass die Spannung am Löschkondensator 17 höher ist als die Spannung am Gleichrichter 12 und die Polarität der Spannung am Löschkondensator der Polarität des parallel geschalteten Gleichrichters entspricht. Während des ungestörten Betriebs der Maschine werden die Thyristoren im Gleichrichter 12 von einem nichtgezeigten Steuerkreis in bekannter Weise sequentiell und periodisch gezündet, um die Feldwicklung 13 mit dem vorgesehenen Erregerstrom zu versorgen. Der Löschthyristor 16 und der Entregungsthyristor 26 sind während dieser Zeit gesperrt.

Sobald im Feldkreis eine Störung auftritt, beispielsweise ein unzulässig hoher Feldstrom, der von einem Kurzschluss im Ankerkreis induziert wird, erhält der Thyristorsteuerkreis von einer nichtgezeigten Sensorschaltung ein Abschaltsignal. Das Abschaltsignal bewirkt, dass der Löschthyristor 16 und der Entregungsthyristor 26 einen Zündimpuls erhalten und zugleich die Auftastsignale für die Thyristoren im Gleichrichter 12 gesperrt werden. Der mit dem Zünden des Löschthyristors einsetzende Entladestrom des Löschkondensators fliesst durch die Feldwicklung 13, die Sekundärwicklung 10 des Transformators, die Entkopplungsdioden 19 und die Löschdrossel 18, bis der Kondensator um- bzw. entladen ist. Dabei ersetzt der Entladestrom für eine kurze Zeitspanne den vom Gleichrichter 12 gelieferten Strom, so dass der oder die eingeschalteten Thyristoren im Gleichrichter während dieser Zeitspanne stromlos sind. Bei geeigneter Dimensionierung von Löschkondensator und Löschdrossel ist die Zeitspanne länger als die Freiwerdezeit der Thyristoren im Gleichrichter, womit die Stromleitung durch die Thyristoren unterbrochen ist. Nach Umpolung des Kondensators kommutiert der Strom auf den vom Thyristor 26 und Widerstand 27 gebildeten Entregungskreis.

Es versteht sich, dass die Schutzschaltung nur wirksam ist, wenn die Spannung am Löschkondensator und die Durchlassrichtung des Löschthyristors so gewählt sind, dass der Entladestrom kurzzeitig den Hauptstrom ersetzen bzw. unterbrechen kann. Dagegen ist es möglich, die Reihenfolge von Löschthyristor, -kondensator und -drossel in der gezeigten Reihenschaltung beliebig zu vertauschen, ohne dass dadurch die Funktion der Schutzschaltung beeinträchtigt wird.

Fig. 2 zeigt das Prinzipschema einer Zwei-Phasenbrückenschaltung 30 mit einer zugeordneten Schutzschaltung 31, deren Lösch- und Entregungsthyristor 32 zugleich als gesteuertes Ventil für den Entregungskreis wirksam ist. Bei dieser Schaltung ist die Zwei-Phasensekundärwicklung 33 des Transformators in bekannter Weise mit den beiden Zweigen 34, 36 einer Gleichrichterbrücke verbunden. An die Ausgänge der Zwei-Phasenbrückenschaltung 30 ist wieder eine induktive Last 37 angeschlossen. Der eine Anschluss des Löschkondensators 38 ist über eine Löschdrossel 39 und zwei Entkopplungsdioden 41 mit jeder der zwei Eingangsleitungen der Brückenschaltung verbunden. Der andere Ausgang des Löschkondensators ist über den Thyristor 32 mit der einen Ausgangsleitung 42 und über eine Diode 43 und einen Entregungswiderstand 44 mit der anderen Ausgangsleitung 46 der Brückenschaltung verbunden.

Beim Zünden des Lösch- und Entregungsthyristors 32 und gleichzeitiger Sperrung der Zündimpulse für die Thyristoren im Brückengleichrichter wird der Löschkondensator 38 über die Leitung 42, die Last 37, die Leitung 46, den zu diesem Zeitpunkt stromleitenden Thyristor im Zweig 36 der Gleichrichterbrücke, die nachgeschaltete Entkopplungsdiode und die Löschdrossel 39 ent- bzw. umgeladen. Dabei wird der Strom durch den leitenden Thyristor im Zweig 34 mit dem Einsetzen des Kondensatorentladestroms unterbrochen, während der Strom in leitenden Thyristor des Zweigs 36 erst unterbrochen wird, wenn die Kondensatorspannung auf die Durchlassspannung dieses Thyristors und der nachgeschalteten Entkopplungsdiode abgesunken ist.

Für eine Drei-Phasenschaltung, die entsprechend der Fig. 2 aufgebaut war, konnte gezeigt werden, dass der Laststrom 180 Mikrosekunden nach dem Zünden des Löschthyristors vom Löschkreis übernommen wurde und die Thyristoren im Zweig 34 stromlos waren und nach 1825 Mikrosekunden auch der Stromfluss durch die Thyristoren im Zweig 36 unterbrochen war. Der Entregungsstrom von 15 kA benötigt etwa 10 Sekunden, um über den Entregungskreis abzuklingen.

Die Diode 43 im Entregungskreis verhindert, dass der Entregungskreis für den Kondensatorentladestrom einen Nebenschluss zum Löschkreis bildet, der das Kommutieren des Laststroms vom Zweig 34 auf den Löschkondensator 38 verzögert oder verhindert.

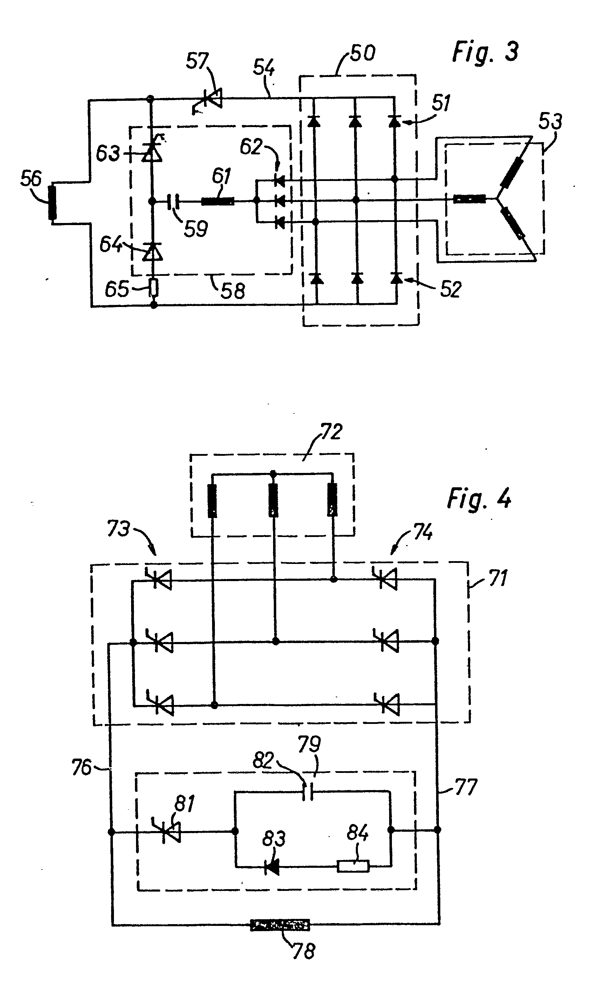

Die Fig. 3 zeigt das Schema einer Drei-Phasen-Diodengleichrichterbrücke mit einer Schutzschaltung. Die Gleichrichterbrücke 50 enthält in den beiden Brückenzweigen 51, 52 je drei Dioden, die mit der im Stern geschalteten Ankerwicklung 53 einer Drehstrommaschine verbunden sind. In der Verbindungsleitung 54 vom einen Brückenzweig 51 zur Last 56 ist ein Schaltthyristor 57 vorgesehen. Der Lösch- und Entregungskreis 58 ist praktisch gleichartig wie bei der Ausführungsform gemäss der Fig. 2 aufgebaut und enthält einen Löschkondensator 59, eine Löschdrossel 61, drei mit den Leitungen von der Ankerwicklung 53 verbundene Entkopplungsdioden 62 sowie in Reihenschaltung einen Lösch- und Entregungshtyristor 63, eine Diode 64 und einen Entregungswiderstand 65.

Die Funktion dieser Schutzschaltung entspricht praktisch genau der bereits im Zusammenhang mit der Fig. 2 beschriebenen Funktionsweise. Unterschiedlich ist nur, dass der Laststrom vom Brückenzweig 51 nach dem Kommutieren auf den Kondensator 59 durch das Sperren des zusätzlichen Schaltthyristors 57 unterbrochen wird, weil die Dioden in der Brücke nicht dauerhaft gesperrt werden können.

Die Schaltung gemäss der Fig. 3 kann beispielsweise für die indirekte rotierende Erregung eines Synchrongenerators verwendet werden, bei der die umlaufende Ankerwicklung 53 mit einer ruhenden Erregerwicklung zusammenwirkt und die als umlaufende Erregerwicklung ausgebildete Last 56 mit einer im Stern geschalteten Generatorwicklung. Es versteht sich, dass für diese Verwendung lichtgezündete Thyristoren erforderlich sind, was durch die Pfeile bei den entsprechenden Symbolen angedeutet ist.

Die Fig. 4 zeigt das Prinzipschema eines Drei-Phasenbrückengleichrichters, dessen Lösch- und Entregungskreis einen gemeinsamen Zweig mit einem für beide Kreise wirksamen Thyristor aufweist und wobei der Löschkreis parallel zu beiden Brückenzweigen geschaltet ist. Der gezeigte Brückengleichrichter 71 ist wieder an die Sekundärwicklung 72 eines Transformators angeschlossen, und die Ausgänge der beiden Brückenzweige 73, 74 sind über Leitungen 76, 77 mit der induktiven Last 78 verbunden. Die Schutzschaltung 79 enthält einen Lösch- und Entregungsthyristor 81, zu dem ein Löschkondensator 82 in Reihe geschaltet ist. Zum Löschkondensator ist weiter eine Diode 83 und ein Entregungswiderstand 84 parallel geschaltet.

Beim Zünden des Lösch- und Entregungsthyristors 81 wird der Löschkondensator 82 über die Leitung 76, die Last 78, die Leitung 77, den zu diesem Zeitpunkt leitenden Thyristor im Brückenzweig 74, über zwei Wicklungszweige der Sekundärwicklung 72 und den noch leitenden Thyristor im Brückenzweig 73 entladen. Diese Anordnung der Löschschaltung hat den Vorteil, dass keine zusätzliche Löschinduktivität erforderlich ist, weil die in den Löschstromkreis einbezogene Sekundärwicklung des Transformators die Funktion der Löschdrossel übernimmt und dass der Laststrom in den beiden Brückenzweigen praktisch gleichzeitig unterbrochen wird.

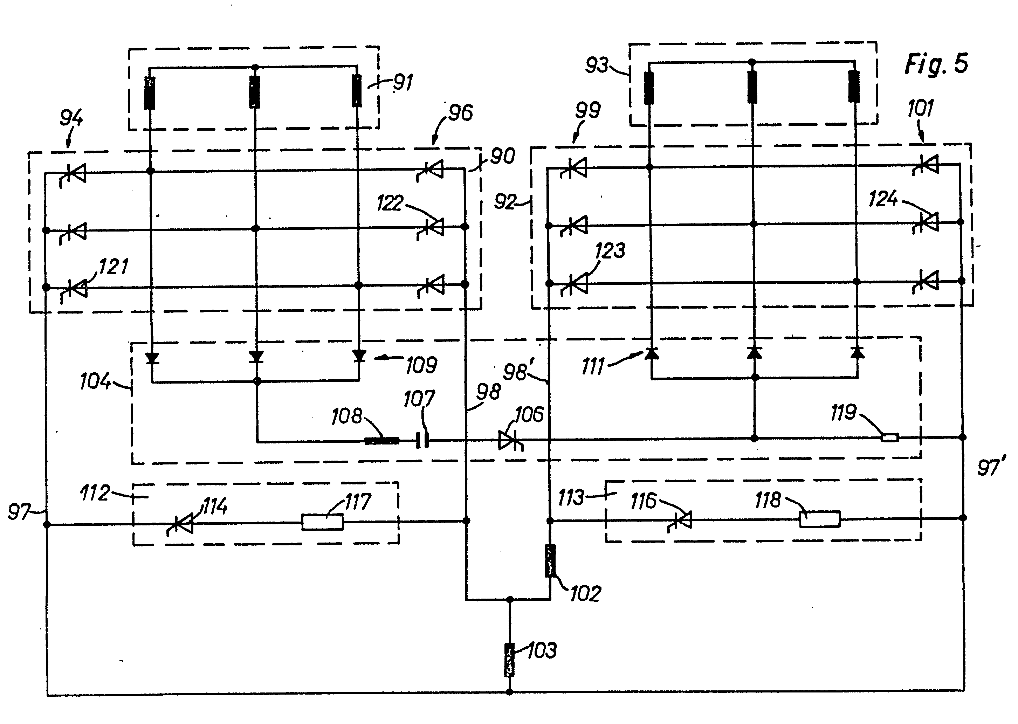

In Fig. 5 ist das Prinzipschema einer mit der neuen Schutzschaltung ausgerüsteten, kreisstrombehafteten Gegenparallelschaltung gezeigt. Diese Schaltung enthält eine Drei-Phasengleichrichterbrücke 90, deren Eingänge mit der Sekundärwicklung 91 eines Transformators verbunden sind, sowie eine Drei-Phasenwechselrichterbrücke 92, deren Eingänge mit den Ausgängen der Sekundärwicklung 93 eines Transformators verbunden sind. Die beiden Zweige 94, 96 des Brückengleichrichters sind über Leitungen 97, 97' und 98, 98' mit den entgegengesetzt polarisierten Zweigen 99 bzw. 101 der Wechselrichterbrücke verbunden. In der einen Leitung 98, 98' ist eine Kreisstromdrossel 102 vorgesehen, und die induktive Last 103 ist zwischen den Leitungen 97, 97' und 98, 98' angeschlossen. Die Schaltung enthält einen Löschkreis 104 mit der Reihenschaltung eines Löschthyristors 106, eines Löschkondensators 107 und einer Löschdrossel 108. Das freie Ende der Löschdrossel ist über Entkopplungsdioden 109 mit den Eingangsleitungen für die Gleichrichterbrücke und das freie Ende des Löschthyristors über Entkopplungsdioden 111 mit den Ausgangsleitungen für die Wechselrichterbrücke verbunden. Zwischen dem Anschlusspunkt der wechselrichterseitigen Entkopplungsdioden 111 und der einen Leitung 97' des Wechselrichters ist ein Löschwiderstand 119 vorgesehen. Parallel zur Last 103 und zu den Leitungen 97, 98 der Gleichrichterbrücke ist ein erster Entregungskreis 112, und ebenfalls parallel zur Last und zu den Leitungen 97', 98' der Wechselrichterbrücke ist ein zweiter Entregungskreis 113 angeschlossen. Jeder Entregungskreis enthält einen Thyristor 114 bzw. 116 und einen Entregungswiderstand 117 bzw. 118.

Zur Beschreibung der Arbeitsweise des Löschkreises in dieser Schaltung sei angenommen, dass in der Gleichrichterbrücke die Thyristoren 121 und 122 und in der Wechselrichterbrücke die Thyristoren 123, 124 gezündet sind. Dann fliesst ein Strom von dem in der Figur rechten Zweig der Transformatorwicklung 91 durch den Thyristor 121, die Leitung 97 zur Last 103 und durch die Leitung 98 und den Thyristor 122 zum mittleren Zweig der gleichen Transformatorwicklung zurück. Gleichzeitig fliesst ein Strom von dem in der Figur rechten Zweig der Transformatorwicklung 93 durch den Thyristor 123, die Leitung 98', und die Kreisstromdrossel 102, die Leitung 98, den Thyristor 122, die Transformatorwicklung 91 und den Thyristor 121, die Leitungen 97, 97' und den Thyristor 124 zurück zum mittleren Zweig der Transformatorwicklung 93.

Beim Zünden des Löschthyristors 106 wird der Löschkondensator 107 über den Gleichrichter- und über den Wechselrichterzweig dieser Schaltung entladen. Der Gleichrichterentladungsstromkreis führt über den Löschwiderstand 119, die Leitung 97', die Last 103, die Leitung 98, den als leitend angenommenen Thyristor 122, die zugeordnete Entkopplungsdiode und die Löschdrossel 108. Beim Erscheinen des Entladungsstroms in der Leitung 97' wird der Strom in der Leitung 97 unterbrochen, so dass beim Ausbleiben der Zündimpulse der Thyristor 121 verlöscht. Der Entladestromkreis durch den Wechselrichter führt über die Entkopplungsdioden 111, den als leitend angenommenen Thyristor 123, die Leitung 98', die Kreisstromdrossel 102, die Leitung 98, den als leitend angenommenen Thyristor 122, die nachgeschaltete Entkopplungsdiode und die Löschdrossel 108. Der dabei in der Zuleitung zum Thyristor 124 erscheinende, über den in der Figur mittleren und rechten Zweig der Sekundärwicklung 93 fliessende Strom bewirkt, dass der Thyristor 124 während einer ausreichend langen Zeit stromlos ist, um zu verlöschen.

Weil gleichzeitig mit dem Löschthyristor 106 auch die Thyristoren 114, 116 in den Entregungskreisen gezündet werden, kann der Entregungsstrom in Abhängigkeit von seiner Richtung über den einen oder den anderen Entregungskreis abklingen.

Wie bereits einleitend erwähnt wurde, kann die neue Schutzschaltung mit besonderem Vorteil in Erregersystemen für Synchronmaschinen verwendet werden, die für die Energieerzeugung oder -verteilung vorgesehen sind. Die heute grössten Generatoren weisen eine Erregernennspannung von etwa 1 000 Volt und einen Nennstrom bis zu etwa 10'000 Ampère auf. Bei Fehlern im Ankerkreis, beispielsweise einem Statorklemmen oder Hochspannungskurzschluss können in der Feldwicklung und dem dazugehörigen Erregerkreis Fehlerströme induziert werden, die ein Mehrfaches des genannten Nennstroms betragen. Da bei einem Kurzschluss im Ankerkreis die Generatorspannung praktisch auf Null absinkt und damit die Kommutierspannung für die Thyristoren im Gleichrichter ausfällt und die Zeit bis zum Oeffnen eines mechanischen Trennschalters und Kommutieren des Stroms auf den Entregungskreis etwa 100 bis 200 Millisekunden beträgt, würden die zuletzt gezündeten Thyristoren während dieser Zeitspanne den gesamten Fehlerstrom führen und ausserdem beim Oeffnen des Trennschalters mit der dabei entstehenden überhöhten Lichtbogenspannung beansprucht werden. Beim Fehlen geeigneter Schutzeinrichtungen werden in einem solchen Fall mindestens die Thyristoren im Gleichrichter vom hohen Fehlerstrom oder der überhöhten Lichtbogenspannung mit grosser Wahrscheinlichkeit zerstört.

Durch die ausserordentlich schnelle Entlastung der Stromrichterventile vom Fehlerstrom kann ein Ansprechen der mit diesen Ventilen in Reihe geschalteten Sicherungen verhindert werden. Die beschriebene Schutzschaltung kann selbstverständlich auch zum Abschalten und Entregen aktiver Lastkreise, z. B. des Ankerkreises einer Gleichstrommaschine mit Gegenspannung eingesetzt werden.

**Ansprüche**

1. Schutzschaltung zum Unterbrechen des von einem Stromrichter an eine induktive Last (37 ; 56 ; 78) fliessenden Stromes und zur Entregung der induktiven Last, enthaltend einen Löschkreis, der zu mindestens einem Schaltthyristor (57) parallelgeschaltet ist und der ein Löschventil und einen dazu in Reihe geschalteten Löschkondensator (38 ; 59 ; 82) aufweist, sowie einen parallel zur Last (37 ; 56 ; 78) geschalteten Entregungskreis mit mindestens einem Entregungswiderstand (44 ; 65 ; 84) und einem dazu in Reihe geschalteten Entregungsventil (43 ; 64 ; 83), dadurch gekennzeichnet, dass Entregungs- und Löschkreis einen gemeinsamen Stromzweig aufweisen, in dem ein als Lösch- und Entregungsventil wirkender Thyristor (32 : 63 ; 81) vorgesehen ist, und dass der verbleibende Stromzweig des Entregungskreises eine in Reihe mit dem als Lösch- und Entregungsventil wirkenden Thyristor (32 : 63 ; 81) gepolte Diode aufweist.

2. Schutzschaltung nach Anspruch 1, dadurch gekennzeichnet, dass der Löschkondensator (82) parallel zur Diode (83) des Entregungskreises und dem Entregungswiderstand (84) geschaltet ist (Fig. 4).

3. Schutzschaltung zum Unterbrechen des von einem Stromrichter an eine induktive Last (103) fliessenden Stromes und zur Entregung der induktiven Last (103), enthaltend einen Löschkreis (104), der zu mindestens einem Schaltthyristor (121, ..., 124) parallelgeschaltet ist und der ein Löschventil (106) und einen dazu in Reihe geschalteten Löschkondensator (107) aufweist, sowie mindestens einen parallel zur Last (103) geschalteten Entregungskreis (112, 113) mit mindestens einem Entregungswiderstand (117, 118) und einem dazu in Reihe geschalteten Entregungsventil, dadurch gekennzeichnet, dass als Stromrichter eine mit einer ersten Sekundärwicklung (91) eines Transformators verbundene Gleichrichterbrücke (90) und eine mit einer zweiten Sekundärwicklung (93) eines Transformators verbundene Wechselrichterbrücke (92) vorgesehen sind, deren entgegengesetzt polarisierten Brückenzweige (94, 101 ; 96, 99) miteinander verbunden sind, dass ein erster Entregungskreis (112) parallel zur induktiven Last (103) und zu den Brückenzweigen (94, 96) der Gleichrichterbrücke (90) und ein zweiter Entregungskreis (113) parallel zur induktiven Last (103) und zu den Brückenzweigen (99, 101) der Wechselrichterbrücke (92) angeordnet sind, und dass jeder der beiden Entregungskreise (112, 113) als Entregungsventil einen Thyristor (114, 116) aufweist.

4. Schutzschaltung nach einem der Ansprüche 1 oder 3, dadurch gekennzeichnet, dass der Löschkreis über Entkopplungsdioden (41 ; 62 ; 109, 111) mit den Speisespannungsleitungen des Stromrichters verbunden ist (Fig. 2, 3, 5).

## Claims

1. A protection circuit for interrupting the current flowing from a static converter to an inductive load (37 ; 56 ; 78) and for de-energising the inductive load, containing a commutating circuit which is connected in parallel with at least one switching thyristor (57) and which is provided with a commutating rectifier and a commutating capacitor (38 ; 59 ; 82) which is connected in series with the rectifier, and a de-energising circuit which is connected in parallel with the load (37 ; 56 ; 78) and which has at least one de-energising resistance (44 : 65 ; 84) and a de-energising rectifier (43 ; 64 ; 83) which is connected in series with the resistance, characterised in that the de-energising and commutating circuit have a joint current branch in which a thyristor (32 ; 63 ; 81) acting as commutating and de-energising rectifier is provided, and that the remaining current branch of the de-energising circuit is provided with a diode biassed in series with the thyristor (32 ; 63 ; 81) acting as commutating and de-energising rectifier.

2. A protection circuit according to Claim 1, characterised in that the commutating capacitor (82) is connected in parallel with the diode (83) of the de-energising circuit and with the de-energising resistance (84) (Figure 4).

3. A protection circuit for interrupting the current flowing from a static converter to an inductive load (103) and for de-energising the inductive load (103), containing a commutating circuit (104) which is connected in parallel with at least one switching thyristor (121, ..., 124) and which is provided with a commutating rectifier (106) and a commutating capacitor (107) which is connected in series thereto and at least one de-energising circuit (112, 113) which is connected in parallel with the load (103) and which has at least one de-energising resistance (117, 118) and a de-energising rectifier which is connected in series with the resistance, characterised in that the static converter provided is a rectifier bridge (90) connected to a first secondary winding (91) of a transformer and an inverter bridge (92) connected to a second secondary winding (93) of a transformer, the oppositely biassed branches (94, 101 ; 96, 99) of which inverter bridge are connected to each other, that a first de-energising circuit (112) is arranged in parallel with the inductive load (103) and with the branches of the rectifier bridge (90) and a second de-energising circuit (113) is arranged in parallel with the inductive load (103) and, with the branches (99, 101) of the inverter bridge (92), and that each of the de-energising circuits (112, 113) has a thyristor (114, 116) as de-energising rectifier.

4. A protection circuit according to one of Claims 1 or 3, characterised in that the commutating circuit is connected via decoupling diodes (41 ; 62 ; 109, 111) to the supply voltage lines of the static converter (Fig. 2, 3, 5).

## Revendications

1. Circuit de protection destiné à interrompre le courant passant d'un convertisseur de courant à une charge inductive (37 ; 56 ; 78) et à désexciter la charge inductive, comprenant un circuit d'extinction qui est connecté en parallèle au moins avec un thyristor de commutation (57) et qui comporte une valve d'extinction et un condensateur d'extinction (38 : 59 ; 82) en série avec la valve, ainsi qu'un circuit de désexcitation connecté en parallèle avec la charge (37 ; 56 ; 78) et comportant au moins une résistance de désexcitation (44 ; 65 ; 84) et une valve de désexcitation (43 ; 64 ; 83) qui y est connectée en série, caractérisé en ce que les circuits de désexcitation et d'extinction présentent une branche de courant commune dans laquelle un thyristor (32 ; 63 ; 81) servant de valve d'extinction et de désexcitation est prévu et la branche de courant restante du circuit de désexcitation présente une diode polarisée en série avec le thyristor (32 ; 63 ; 81) servant de valve d'extinction et de désexcitation.

2. Circuit de protection suivant la revendication 1, caractérisé en ce que le condensateur d'extinction (82) est connecté en parallèle à la diode (83) du circuit de désexcitation et à la résistance de désexcitation (84) (Fig. 4).

3. Circuit de protection pour interrompre le courant passant d'un convertisseur à une charge inductive (103) et pour désactiver la charge inductive (103), comportant un circuit d'extinction (104) qui est connecté en parallèle à au moins un thyristor de commutation (121, ..., 124) et qui présente une valve d'extinction (106) et un condensateur d'extinction (107) qui y est connecté en parallèle ainsi qu'au moins un circuit de désexcitation (112, 113) connecté en parallèle à la charge (103) et présentant au moins une résistance de désexcitation (117, 118) et une valve de désexcitation qui y est connectée en série, caractérisé en ce qu'à titre de convertisseur de courant sont prévus un pont redresseur (90) connecté à un premier enroulement secondaire (91) d'un transformateur et un pont convertisseur continu (92) connecté à un second enroulement secondaire (93) d'un transformateur, les branches de pont polarisées en sens opposé (94, 101 ; 96, 99) du convertisseur de courant étant connectées l'une à l'autre, un premier circuit de désexcitation (112) est disposé en parallèle à la charge inductive (103) et aux branches (94, 96) du pont redresseur (90) et un second circuit de désexcitation (113) est disposé en parallèle à la charge inductive (103) et aux branches (99, 101) du pont convertisseur continu (92), et chacun des deux circuits de désexcitation (112, 113) comporte un thyristor (114, 116) à titre de valve de désexcitation.

4. Circuit de protection suivant l'une ou l'autre des revendications 1 ou 3, caractérisé en ce que le circuit d'extinction est connecté (Fig. 2, 3, 5) par l'intermédiaire de diodes de découplage (41 ; 62 ; 109, 111) aux conducteurs de tension d'alimentation du convertisseur de courant.

Fig. 1

Fig. 2

*Fig. 3*

*Fig. 4*

Fig. 5

0 034 845